# EUROPEAN PATENT SPECIFICATION

(11) **EP 0 801 892 B1**
(45) Date of publication and mention of the grant of the patent: **21.02.2001**
(21) Application number: 97202004.4
(22) Date of filing: 13.04.1993
(51) Int. Cl.: A01J 5/017, A01K 1/12

(54) **A construction for automatically milking animals, such as cows**
Gerät zum automatischen Melken von Tieren, wie Kühen
Dispositif de traite automatique d'animaux, tels que les vaches

(30) Priority: 13.04.1992 NL 9200678
(43) Date of publication of application: 22.10.1997
(62) Divisional of application: 93201062.2
(73) Proprietor: MAASLAND N.V., 3155 PD Maasland (NL)
(72) Inventor: van der Lely, Cornelis, 6300 ZUG (CH)
(74) Representative: Corten, Maurice Jean F.M.

(56) References cited:
- EP-A- 0 258 938
- EP-A- 0 360 354

## Description

The invention relates to a construction for automatically milking animals, such as cows, comprising a milking parlour and a milking robot having a robot arm with supporting elements for teat cups.

Such a construction is known from EP-A-0 360 354.

The problem with such a construction may be that during positioning and connecting of the teat cups the animal may damage said teat cups. Especially when the animal kicks against the teat cups and/or the supporting arms the supporting arms and/or the teat cups may be damaged.

The present invention has for its object to prevent such problems and to decrease the possibility of damage to the milking process.

According to the invention, the construction is therefore characterized in that the supporting arms are hingeably connected to the robot arm and that each supporting element is moveable against the action of a spring, thereby reducing the possibility of damage and improving the milking process.

In accordance with a further feature of the invention the supporting elements are pivotable about a common horizontal shaft. According to the invention each of the supporting elements is provided with a stop plane, by means of which said supporting element bears against the robot arm under the action of a respective spring.

In order to accommodate the teat cups in a stable and reliable manner on the robot arm, each of the supporting elements according to the invention is provided with a conical seat in which the conical bottom side of a respective teat cup fits.

In order to give the animal a maximum of freedom during milking, a teat cup according to the invention is provided with a pulling manner with the aid of which said teat cup can be pulled against a respective supporting element or can be released therefrom. In accordance with a feature of the invention the pulling member comprises a cable or a cord, produced of a suitable flexible material, which at one end is attached to a cylinder and at the other hand to the bottom part of a respective teat cup. To prevent the animal from damaging the cylinder, the cylinder according to the invention is protectively accommodated in a holder of the robot arm.

For a better understanding of the invention and to show how the same may be carried into effect, reference will now be made, by way of example, to the accompanying drawings, in which:
Figure 1 is a plan view of the construction for automatically milking animals;
Figure 2 is a side view of a holder enclosing milking tubes and lines;
Figure 3 is a plan view of the holder, in which the milk tubes and pulsation lines have been provided;
Figure 4 is a cross-sectional view of the holder taken on the line IV-IV in Figure 3;
Figure 5 is a front view of the holder taken on the line V-V in Figure 2.

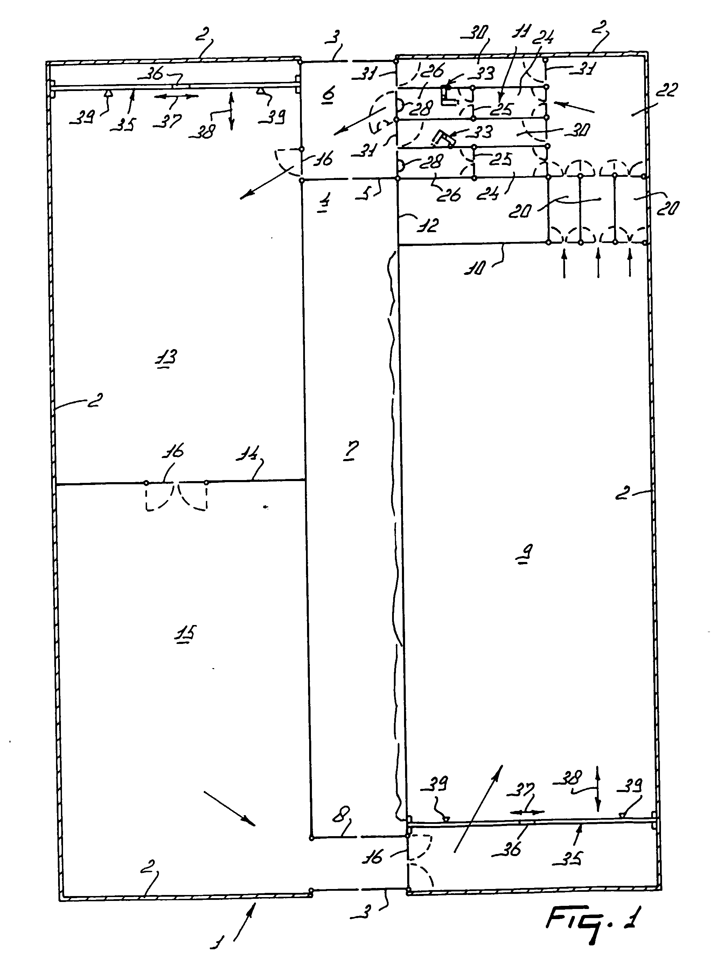

The plan view shown in Figure 1 shows a stable or dwelling place 1 for milking animals, which is entirely or partly enclosed by a number of walls 2. In this embodiment, the walls 2 are provided on both sides of the stable 1 with a set of doors 3, through which the animals can be brought inside or outside. In this case the stable is a closed loose house, wherein the animals are staying in the house. The invention, however, also relates to an open loose house, in which, for example, one of the walls 2 is entirely or partly omitted, so that the animals can freely go inside or outside via a passage located next to the stable. In the embodiment shown, there is located in the centre of the smallest dimension of the stable 1 a feeding passage 4 which extends through a portion of the stable 1 and is separated from the area located on either side thereof by a wall having vertical rods or similar barriers, through which the animals can pass their heads so as to obtain fodder from the feeding passage 4. The feeding passage 4 is divided into two sections by swing doors 5, a first section 6 being bounded by the doors 3 in the wall 2 and the swing doors 5, while the second section 7 is bounded by the swing doors 5 and a set of further doors 8 at the end of the feeding passage 4. Taken in the longitudinal direction, the first section 6 is, as regards its dimensions, significantly smaller than the second section 7; the length of the first section 6 amounts to approximately 1/6 of the length of the second section 7.

On either side of the feeding passage 4, the stable 1 has a number of sub-areas in which the animals can be housed. The first sub-area 9 is bounded by two walls 2, the wall with vertical rods or similar barriers and a first partition 10. The length of the area 9 between the first partition and the wall 2 amounts to approximately 4/5 of the length of the longest side of the stable 1. The third area 11 of the stable 1 is bounded by walls 2, a first partition 10 and a second partition 12. The length between the first partition 10 and the wall 2 of the third area 11 amounts to approximately 1/5 of the length of the longest side of the stable 1. The third area 11 borders by means of the second partition 12 on the first area 6.

At the other side of the feeding passage 4, the stable 1 has a third sub-area 13 which is bounded by two walls 2, the wall with vertical rods or similar barriers and a second partition 14. The second partition 14 forms a division between the third sub-area 13 and a second sub-area 15. The second sub-area 15 is bounded, as is also the third sub-area 13, by walls 2, the wall with vertical rods or similar barriers and the second partition 14. The length of the third sub-area 13 and the second sub-area 15 amounts to approximately half the length of the longest side of the stable 1.

The partitions between the sub-areas are further provided with first doors 16, through which the animals have access from one sub-area to an other sub-area. In addition, three sanitation areas 20, each having room for one animal, are arranged in the third area 11. In the sanitation areas 20, the animals can be cleaned and/or disinfected by a (non-shown) cleaning/disinfecting implement. After the animals have been treated in the sanitation areas 20, the animals can move to an intermediate area 22 positioned in the second sub- area 11. From the intermediate area 22 the animal can move to two adjacently positioned waiting boxes 24. The waiting boxes 24 have a second door 25, which allows the animals to enter milking boxes 26 positioned in the extension of the waiting boxes 24. The milking boxes 26 are provided with a feeding trough 28. By means of a (non-shown) fodder dosing system, concentrated feeding material can be provided to the animals in the feeding trough 28. In addition to each of the waiting boxes 24 and the milking boxes 26 there is a passageway 30 having third doors 31. Located in the passageway 30, near each of the milking boxes 26, there is a milking robot 33, by means of which an animal standing in the milking box 26 can be milked automatically. In operation, the milking operation is normally performed with one milking robot, and the second milking robot is not used until the first milking robot cannot duly milk the number of animals.

Both on the left-hand side and on the right-hand side of the feeding passage 4, an expelling implement 35 extends through the overall width of the stable 1, bounded by the wall 2 and the wall having vertical rods or similar barriers. The expelling implement 35 preferably includes a telescoping arm 36 which extends in the lateral direction over the sub-areas 9, 13, 15 and is suspended from a travelling trolley construction in the stable 1. The arm 36 is movable in the direction indicated by arrows I. The arm 36 is equipped with at least one descending wire to which current can be applied (electric fence voltage). The arm 36 can be moved in the direction indicated by arrows 38 in the longitudinal direction of the stable 1 along a (non-shown) rail, as is customary for a travelling trolley. In addition to the descending wire, the arm 36 is provided with means 39 which supply light signals and/or acoustic signals and can co-operate with the descending wire. When the animals are to be driven, for example, because the animals are to be moved from one sub-area to another, an acoustic and/or light signals is supplied by the light and/or acoustic means 39, which is an indication to the animals that they are to leave the relevant sub-area. If necessary, the expelling implement 35 is moved -forwards in the longitudinal direction of the stable 1, the animals still present in the relevant sub-area being induced by the wire, which is suspended from the arm 36 and on which there is an electric charge, to move to the other sub-area.

The construction for automatically milking animals operates as follows:

As has already been stated hereinbefore, the stable 1 comprises in this embodiment three sub-areas. A hundred cows are, for example, accommodated in the sub-areas, the animals being subdivided into two groups of fifty animals, each group being housed in separate sub-areas, so that the animals of this group can successively be milked in defined time intervals. The length of the time intervals is determined by the number of milking runs per 24 hours' period. Starting from the assumption that there are, for example, three milking runs per 24 hours' period, this consequently means that the length of the time intervals corresponds to eight hours, in other words: after eight hours a group of previously milked animals is milked again. This means that in each 24 hours' period each group of fifty animals all pass three times through all the three sub-areas 9, 13, 15.

As a starting point, les it be assumed that the first group of fifty animals is in the second sub-area 15 and the second group of fifty animals is accommodated in the first sub-area 9. The animals of the second group can move at random from the first sub-area 9 to the sanitation areas 20, in which the udder and/or the teats of in this case always a maximum of three animals can be cleaned. After the udder and/or the teats of an animal have been cleaned, the animal leaves the sanitation area 20 and arrives in the intermediate area 22, so that a number of animals can be present in the intermediate area 22. From the intermediate area 22 always one animal can enter the waiting box 24 when this box is free or becomes free. From the waiting box 24 the animal can thereafter walk to the milking box 26 when it is released by the second door 25. In the milking box 26, the animal is identified by a (non-shown) animal identification system. On the basis of the animal identification data, a quantity of concentrated fodder matched to the relevant animal is deposited in the feeding trough 28 by a fodder dosing system. In addition, the milking robot 33 is energized by a (non-shown) computer, whereafter the animal is milked automatically.

If at a given instant it should appear that too many animals arrive in the intermediate area 22, then the other milking robot 33 can temporarily be switched-on with the object of reducing in that manner the waiting time of the animals in the intermediate area 22.

After the computer has determined that the animal has been milked, the animal leaves the milking box 26 and passes via the first area 6 into the third sub-area 13. In the third sub-area 13, the animal can optionally take some rest in (non-shown) rest boxes. Each of the fifty animals present in the first sub-area 9 can in this manner go voluntarily and in any random sequence to the third sub-area 13, so that after four hours all the fifty animals of the second group may have moved via the milking robot 33 to the third sub-area 13. It might, however, also occur that one or more animals, for whatever reason, remain behind in the first sub-area 9. This is, however, undesirable, since the remaining animals then would mix with the other, first group of animals which, after the above-mentioned four hours have elapsed, arrive in the first sub-area 9. To prevent intermingling of groups of animals, it is therefore checked, after the four hours have elapsed, with the aid of a plurality of (non-shown) sensors whether animals of the second group are still present in the first sub-area 9. The sensors may be infrared sensors, using which it can be determined on the basis of the animals' body heat whether animals are still present in the relevant sub-area. Should the situation now be such that animals have still stayed behind in the first sub-area 9, then by giving light signals and/or acoustic signals in the relevant area the animals are thereafter induced to leave the first sub-area 9. If after due time it appears that the animals do not react to these signals, then the expelling implement 35 can be advanced step-by-step in the longitudinal direction of the first sub-area towards the sanitation areas 20. The animals still present in the first sub-area 9 are then incited by the live wires suspended from the arm 36 to go to the sanitation areas 20. When all the fifty animals of the second group have left the first sub-area 9, the way is cleared by opening the door 16 between the second sub-area 15 and the first sub-area 9, whereafter the first group of fifty animals can move to the first sub-area 9. The animals of the first group will then usually go voluntarily to the first sub-area 9, because they instinctively sense that they can go from the first sub-area 9 to the milking box 26, where they are milked and supplied with concentrated fodder. A different possibility to lure the animals to the first sub-area 9, is to deposit green forage in the feeding passage 4 near the walls with vertical rods. After some time it is also here checked by means of sensors whether all the animals of the second group have gone to the first sub-area 9; if there are stragglers then they are forced, in the manner already described in the foregoing, using the expelling implement 35 to leave the sub-area. When the second sub-area 15 is empty, the door 16 between the second sub-area 15 and the first sub-area 9 is closed. Simultaneously the door 16 between the third sub-area 13 and the second sub-area 15 is opened and the second group of animals, which at that moment is present in the third sub-area 13, are notified by means of light signals and/or acoustic signals to move to the second sub-area 15. Straggling animals can also here, after some time, be actively forced by means of the expelling implement 35 to move to the second sub-area 15. The second group of fifty animals is given a four hours' rest in the second sub-area 15, whilst the first group of animals in the first sub-area 9 is given four hours' time to move via the milking box 26 to the third sub-area 13 which is empty at that moment.

After four hours it is assumed that the first group of animals has been milked and it is consequently assumed that the entire group has moved to the third sub-area 13, whereafter the second group of animals can again enter the first sub-area 9. Thereafter the rotation of the two groups of animals through the three sub-areas can start again. Thus, the two groups of animals can be milked immediately one after the other in the milk box(es) 26.

It will be obvious that the invention is not limited to the embodiment described in the foregoing, in which the stable 3 comprises three sub-areas for two groups of animals, but that the stable 1 may alternatively comprise N+1 sub-areas for N groups of animals.

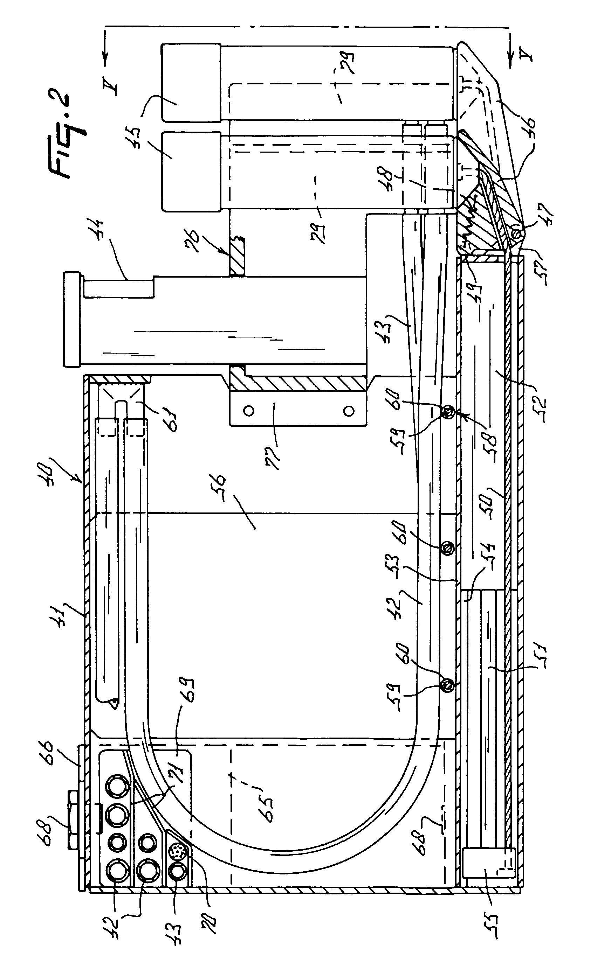

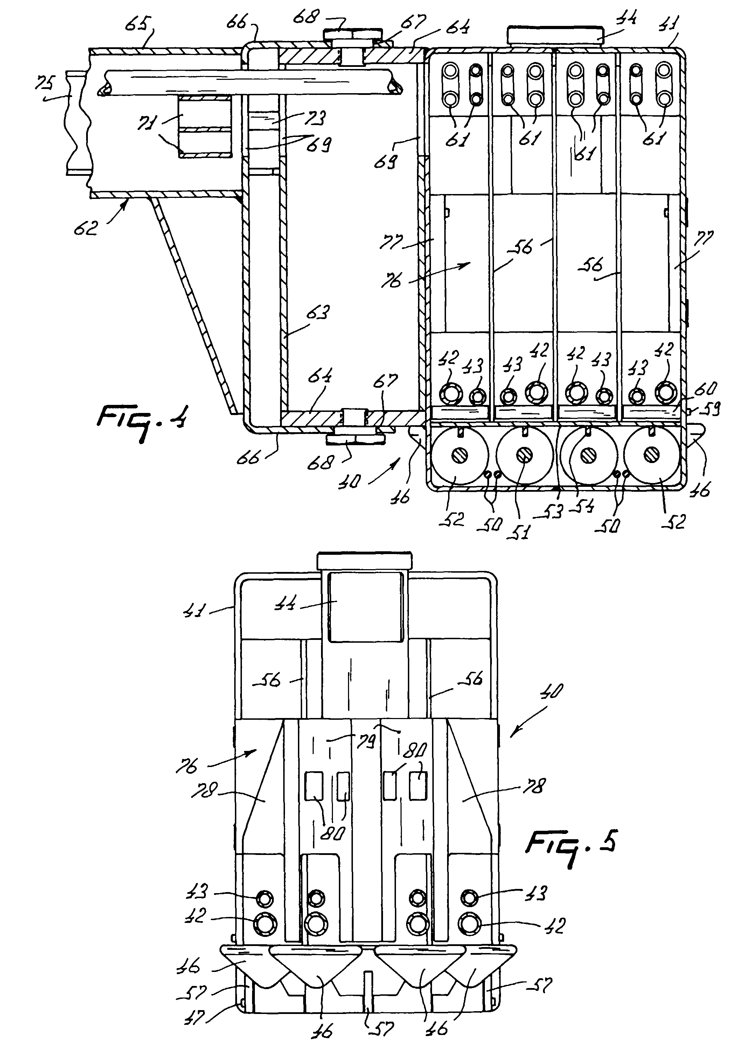

Figures 2 to 5 show a detail of the milking robot 33 arranged in the stable 1. Figure 2 is a cross-sectional view of one end of the robot arm 40. The robot arm 40 comprises a box-like holder 41 containing milk tubes 42 and pulsation tubes 43. Arranged near the end of the holder 41 is a laser device 44, with the aid of which the position of the teats of an animal can be determined. Moreover, four teat cups 45 are provided near the end of the holder 41. Each of the teat cups 45 bears by means of its bottom end on a supporting element 46, which has a conical seat. The bottom side of the teat cups 45 is of such a design that it fits in the conical seat. Each supporting element 46 is mounted capably of pivoting about a shaft 47, which shaft 47 is inserted through a bore near the bottom side of each supporting element 46. The shaft 47 is connected by means of three lugs 57 to the bottom side of the holder 41. Positioned between each of the supporting elements 46 and the holder 41 is a spring 48, by means of which the supporting element 46, which has a stop plane 49, is pulled up against the bottom side of the holder 41. Arranged at the bottom side of the teat cups 45 is a pulling member 50, constituted by cables or cords, produced of a suitable flexible material. The pulling member 50 is passed through a hole drilled in the supporting element 46, as well as through a hole drilled in the holder 41. The pulling member 50 extends to as far as the end of a piston rod 51 of a cylinder 52, where it is attached to a cap 55. Figure 4 shows that four cylinders 52 have been disposed in a side-by-side relationship on the bottom of the holder 41. Through the overall width of the holder 41 a metal plate 53 extends above the cylinders 52. Four guide strips 54 are disposed in the longitudinal direction of the metal plate 53. The guide strips 54 constitute a longitudinal guideway for the round caps 55, which are provided at the end of the piston rod 51. The caps 55 have a notch, in which the guide strips 54 fit. By energizing the cylinders 52 the caps 55 are moved along the guide strips 55 and the teat cups 45 are pulled into the conical seats of the supporting elements 46 by means of the flexible pulling members 50.

In the length-wise direction of the holder 41, three partitions 56 are arranged with equal interspaces between the plate 53 and the upper side of the holder 41. The partitions 56 are positioned approximately in the midway point of the holder 41 and have a length which amounts to approximately 1/3 of the overall length of the holder 41. Consequently, the three partitions 56 partly divide the space above the plate 53 into four separate spaces. In each of these four spaces a milk tube 42 and a pulsation tube 43 of a teat cup 45 are situated. The pulsation tube 43 and the milk tube 42 are positioned in the holder 41 in such a manner that they form a loop. The milk tubes 42 and the pulsation tube 43 extend from the teat cups 45 in the horizontal direction to approximately near the other end of the holder 41. The milk tubes 42 and the pulsation tubes 43 are supported near the plate 53 by three longitudinal guideways 58 which are provided remote from each other in the holder 41. The longitudinal guideways 58 include shafts 59 arranged between the two lateral walls of the holder 41. Four tubes 60, which are each independently rotatable about the shaft 59, are inserted over each shaft 59. A milk tube 42 and a pulsation tube 43 bear on each tube 59.

In the holder 41, near that end that is remote from the teat cups 45, the milk tubes 42 and the pulsation tubes 43 are bent to the upper side of the holder 41 in such a way as to form half a circle. Near the upper side of the holder 41, the tubes 42 and 43 extend thereafter in parallel to the upper side of the holder 41 towards the laser device 44, to as far as U-shaped auxiliary members 61. The U-shaped auxiliary members 61 are applied against the interior wall of the holder 41. Using the U-shaped auxiliary members 61, the milk tubes 42 and the pulsation tubes 43, respectively, are led back through an angle of 180° towards the rear side of the holder 41 where the tubes are folded through 90° towards a carrier 62.

A box girder 63 is disposed against the side of the holder 41, in the vertical direction. At the upper and bottom sides, the box girder 63 is covered by metal plates 64. At the upper and bottom sides, the box girder 63 is clamped between a carrier 62 designed as a fork. The carrier 62 comprises a box girder 65, the end of which is provided with a U-shaped plate 66. The bottom and upper sides of the box girder 63 are clamped by the U-shaped plate 66. At both the upper and the bottom side of the U-shaped plate 66, holes 67 are drilled, through which bolts 68 are inserted. The bolts 68 are relatively short and are provided with thread near the bottom end only. The bolts 67 are screwed in the bottom and upper side, respectively, of the box girder 63, thus forming a pivot shaft, about which the holder 41 can pivot relative to the carrier 62. The upper sides of the box girder 63 and the end of the carrier 62 are provided with apertures 69. The milk tubes 42, the pulsation tubes 43 and an electric wire 70 are passed through the apertures 69. Near the end of the box girder 63, a plurality of supporting elements 71 are positioned, which support the milking tubes 42, the pulsation tubes 43 and the electric wire 70.

An angular strip 72 is provided in the corner between the box girder 63 and the holder 41. The end of a piston rod 73 of a cylinder 74 is secured to the angular strip 72.

The cylinder 74 is arranged parallel to the carrier 62 and is accommodated in a housing 75. By means of the cylinder 75, the holder 41 can be pivoted with respect to the carrier 62 about the vertical pivot shaft formed by the bolts 68.

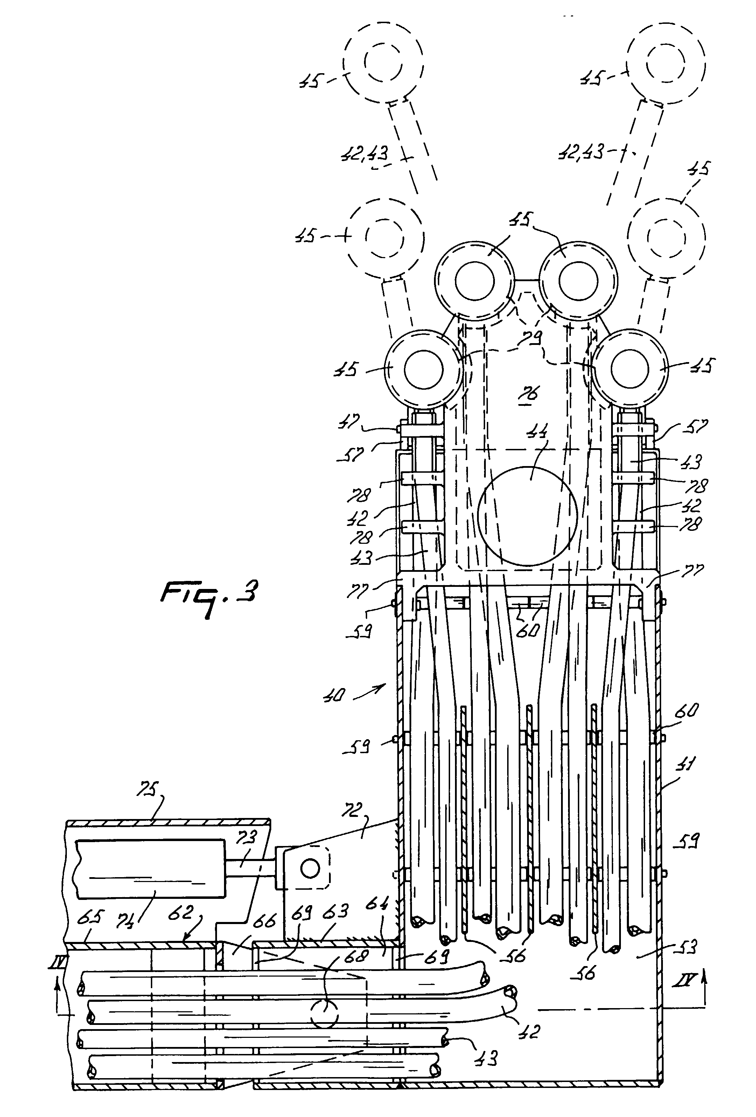

A nose-shaped cast iron member 76 is disposed near the end of the holder 41. The nose-shaped cast iron member 76 comprises a rectangular housing which at one end is provided with lugs 77. The housing is screwed to the interior walls of the holder 41 by means of the lugs 77. The height of the nose-shaped cast iron member 76 amounts to approximately half the height of the holder 41. The nose-shaped housing 76 extends from the leading side of the holder 41 to above the supporting elements 46. The laser device 44 is located near the leading side of the holder 41. The laser device 44 is partly disposed in the housing of the nose-shaped cast iron member 76. The upper portion of the laser device 44 extends to beyond the housing of the nose-shaped cast iron member 76 and to just above the holder 41. The two upper halves of the side edges of the nose-shaped cast iron member 76 are provided with bevelled, upwardly extending triangular ribs 78. The triangular ribs 78 extend from the upper edge of the nose-shaped cast iron member 76 to the exterior, so that the largest width is obtained near the midway point of the side wall of the nose-shaped cast iron member 76. Between the lower side of ribs 78 and the upper side of the outermost supporting elements 46 there is a space, in which the milk tubes 42 and the pulsation tubes 43 of the outermost teat cups 45 are positioned. The outermost milk tubes 42 and the outermost pulsation tubes 43 are shielded, seen from above, by the ribs 78, so that, when a cow kicks, for example, with its leg from above against the leading side of the holder 41, the tubes are shielded by the ribs 78. The milk tubes 42 and the pulsation tubes 43 of the two central teat cups 45 extend through the housing of the nose-shaped cast iron member 76 and are consequently protected by the housing itself from, for example, kicking by an animal (Figure 3, 5).

The leading side of the nose-shaped cast iron member 76 is, in a plan view, in the shape of a trapezium (Figure 3). The oblique sides of the nose-shaped cast iron member 76 are provided with curved planes of contact 79, against which the teat cups 45 bear. In the curved planes of contact 79 magnets 80 are provided, with the aid of which the teat cups can be moved upwardly and/or downwardly relative to the curved plane of contact 79.

The construction for automatically milking animals operates as follows:

After a cow has entered the milking box 26, the robot arm 40 is swiveled to under the animal. The position of the cow's teats is determined by means of the laser device 44. By energizing the cylinder 74, the holder 41 is pivoted about the bolts 68 until the teat cups are positioned under the cow's teats. Thereafter, the pressure is removed from one of the cylinders 52, as a result of which the pulling member 50 is not tightened any more and consequently the associated teat cup 45 is not pulled into the conical seat of the supporting element 46. Simultaneously, the magnet 80 of the relevant teat cup 45 is energized and the teat cup 45 is moved upwardly along the plane of contact 79 to as far as a teat. The relevant teat cup 45 is at that moment evacuated, so that the teat cup 45 is firmly attached to the teat. After the first teat cup 45 has been connected, the other teat cups 45 follow. Usually, the two centremost teat cups 45 are connected first and thereafter the two outermost teat cups 45. In Figure 3, interrupted lines illustrate the possible configuration of the teat cups 45 after they have been connected to the teats of an animal. During connection of the teat cups 45, the holder 41 moves relative to the connected teat cup(s) 45, and consequently a portion of the milk tube 42 and the pulsation tube 43 will move relatively with respect to the holder 41. In the present invention, this can be effected in a particularly advantageous manner, as the milk tube 42 together with the pulsation tube 43 have been disposed slidably in the holder 41. During the motion of the holder 41, the milk tubes 42 and the pulsation tubes 43, of the teat cups 45 connected to the teats of an animal, are wound into or out of the holder 41 along the guideways 58. The loops in the milk tubes 42 and the pulsation tubes 43 render it possible for the tubes to slide in the longitudinal direction of the holder 41 and at the same time provide that the tubes can be relatively long and can still be accommodated in the holder 41 in a compact manner.

Uncoupling the teat cups 45 is effected by removing the vacuum in the teat cups 45 and the simultaneously energization of the cylinders 52, in response to which the piston rods 51 are moved, so that the teat cups 45 are pulled into the conical seats of the supporting elements 46 by pulling members 50.

## Claims

1. A construction for automatically milking animals, such as cows, comprising a milking parlour and a milking robot (33) having a robot arm (40) with supporting elements (46) for teat cups (45), characterized in that the supporting elements (46) are hingeably connected to the robot arm (40) and that each supporting element (46) is movable against the action of a spring (48).

2. A construction as claimed in claim 1, characterized in that the supporting elements (46) are pivotable about a common horizontal shaft (47).

3. A construction as claimed in claim 1 or 2, characterized in that each supporting element (46) is provided with a stop plane (49), by means of which said supporting element (46) bears against the robot arm (33) under the action of a respective spring (48).

4. A construction as claimed in any one of the preceding claims, characterized in that each of the supporting elements (46) is provided with a conical seat in which the conical bottom side of a respective teat cup (45) fits.

5. A construction as claimed in any one of the preceding claims, characterized in that a teat cup (45) is provided with a pulling member (50) with the aid of which said teat cup (45) can be pulled against a respective supporting element (45) or can be released therefrom.

6. A construction as claimed in claim 5, characterized in that the pulling member comprises a cable or cord, produced of a suitable flexible material, which at one end is attached to a cylinder (52) and at the other end to the bottom part of a respective teat cup (45).

7. A construction as claimed in any one of the preceding claims, characterized in that the cylinder (52) is protectively accommodated in a holder (41) of the robot arm (40).

## Patentansprüche

1. Vorrichtung zum automatischen Melken von Tieren, wie z. B. Kühen, mit einem Melkstand und einem Melkroboter (33), der einen Roboterarm (40) mit Stützgliedern (46) für Zitzenbecher (45) aufweist,
dadurch gekennzeichnet, daß die Stützglieder (46) mit dem Roboterarm (40) gelenkig verbunden sind, und daß jedes Stützglied (46) gegen die Kraft einer Feder (48) bewegbar ist.

2. Vorrichtung nach Anspruch 1,
dadurch gekennzeichnet, daß die Stützglieder (46) um eine gemeinsame horizontale Achse (47) schwenkbar sind.

3. Vorrichtung nach Anspruch 1 oder 2,
dadurch gekennzeichnet, daß jedes Stützglied (46) eine Anschlagfläche (49) aufweist, mittels der das Stützglied (46) an dem Roboterarm (40) durch die Kraft einer zugehörigen Feder (48) anliegt.

4. Vorrichtung nach einem der vorhergehenden Ansprüche, dadurch gekennzeichnet, daß jedes der Stützglieder (46) einen konischen Sitz aufweist, in den die konische Unterseite eines zugehörigen Zitzenbechers (45) hineinpaßt.

5. Vorrichtung nach einem der vorhergehenden Ansprüche, dadurch gekennzeichnet, daß ein Zitzenbecher (45) mit einem Zugglied (50) versehen ist, mittels dessen der Zitzenbecher (45) gegen ein zugehöriges Stützglied (46) gezogen oder von ihm gelöst werden kann.

6. Vorrichtung nach Anspruch 5,
dadurch gekennzeichnet, daß das Zugglied ein Seil oder eine Schnur aus einem geeigneten elastischen Material umfaßt, das an einem Ende an einem Zylinder (52) und am anderen Ende an der Unterseite eines zugehörigen Zitzenbechers (45) angebracht ist.

7. Vorrichtung nach einem der vorhergehenden Ansprüche, dadurch gekennzeichnet, daß der Zylinder (52) geschützt in einem Halter (41) des Roboterarmes (40) angeordnet ist.

## Revendications

1. Installation de traite automatique d'animaux, tels que des vaches, comportant un box de traite et un robot de traite (33) ayant un bras de robot (40) muni d'éléments de support (46) destinés à des gobelets trayeurs (45), caractérisée en ce que les éléments de support (46) sont connectés de manière articulée au bras de robot (40), et en ce que chaque élément de support 46 est mobile à l'encontre de l'action d'un ressort (48).

2. Installation selon la revendication 1, caractérisée en ce que les éléments de support (46) peuvent pivoter autour d'un arbre horizontal commun (47).

3. Installation selon la revendication 1 ou 2, caractérisée en ce que chaque élément de support (46) est muni d'un plan de butée (49), par l'intermédiaire duquel ledit élément de support (46) appuie contre le bras de robot (33) sous l'action d'un ressort respectif (48).

4. Installation selon l'une quelconque des revendications précédentes, caractérisée en ce que chacun des éléments de support (46) est muni d'un siège conique dans lequel s'agence le côté de fond conique d'un gobelet trayeur respectif (45).

5. Installation selon l'une quelconque des revendications précédentes, caractérisée en ce qu'un gobelet trayeur (45) est muni d'un élément de traction (50) à l'aide duquel ledit gobelet trayeur (45) peut être tiré contre un élément de support respectif (45) ou peut être libéré de celui-ci.

6. Installation selon la revendication 5, caractérisée en ce que l'élément de traction comporte un câble ou une corde, fabriqué dans une matière souple appropriée, qui est fixé au niveau d'une première extrémité à un vérin (52), et au niveau de l'autre extrémité à la partie de fond d'un gobelet trayeur respectif (45).

7. Installation selon l'une quelconque des revendications précédentes, caractérisée en ce que le vérin (52) est reçu de manière protégée dans un dispositif de maintien (41) du bras de robot (40).
